# EUROPÄISCHE PATENTSCHRIFT

(11) **EP 1 977 429 B1**
(45) Veröffentlichungstag und Bekanntmachung des Hinweises auf die Patenterteilung: **03.08.2011**
(21) Anmeldenummer: 06829828.0
(22) Anmeldetag: 21.12.2006
(51) Int. Cl.: B23Q 9/00

(54) **WERKZEUG ZUR BEARBEITUNG EINER SCHADSTELLE IM DICHTBEREICH EINES REAKTORDRUCKBEHÄLTERS**
TOOL FOR TREATING A DAMAGED POINT IN THE SEALING REGION OF A REACTOR PRESSURE VESSEL
OUTIL DE TRAITEMENT D'UN EMPLACEMENT ENDOMMAGE DANS LA REGION ETANCHE D'UN RECIPIENT DE REACTION SOUS PRESSION

(30) Priorität: 26.01.2006 DE 102006003656
(43) Veröffentlichungstag der Anmeldung: 08.10.2008
(73) Patentinhaber: AREVA NP GmbH, 91052 Erlangen (DE)
(72) Erfinder: GÜGEL, Siegfried, 91096 Möhrendorf (DE); ADAMS, Helmar, 91052 Erlangen (DE); BÖGE, Detlef, 18507 Grimmen (DE)
(74) Vertreter: Mörtel & Höfner
(86) Internationale Anmeldenummer: PCT/EP2006/012399
(87) Internationale Veröffentlichungsnummer: WO 2007/085295

(56) Entgegenhaltungen:
- DE-A1-102004 021 134
- FR-A- 2 651 709
- GB-A- 2 128 524
- US-A- 4 118 897

## Beschreibung

Die Erfindung betrifft ein Werkzeug zur Bearbeitung einer Schadstelle in dem zwischen einem Reaktordruckbehälter und dessen Deckel vorhandenen Dichtbereich. Der Druckbehälter eines Kernreaktors weist einen stirnseitigen Flansch auf, auf dem mit einem Gegenflansch ein Deckel aufliegt und dort verschraubt ist. Im Gegenflansch sind zwei mit Radialabstand zueinander angeordnete Dichtnuten eingebracht, in denen jeweils ein metallischer O-Ring angeordnet ist. Im Montagezustand sind die O-Ringe axial komprimiert. Der Berührungsbereich zwischen O-Ring und Nutgrund bzw. Behälterflansch bildet den Dicht- oder Tragspurbereich. Eine Undichtigkeit im Dichtbereich kann praktisch nur dadurch auftreten, dass dieser etwa beim Wechseln der O-Ringe mechanisch oder durch lokal begrenzte Korrosion, beispielsweise hervorgerufen oder begünstigt durch erhöhte Konzentrationen von Chloriden, beschädigt wird. Schadstellen im Dichtbereich mit einer maximalen Tiefe von etwa 0,05 mm lassen sich durch Abziehen mit Schleifmitteln und Wechseln der O-Ringe beheben. Schädigungen, die sich über einen größeren Tiefenbereich erstrecken, können dadurch saniert werden, dass zunächst die Schadstelle örtlich ausgefräst, anschließend der ausgefräste Bereich aufgeschweißt, und schließlich die Schweißstelle durch eine spanende Bearbeitung abgetragen und geglättet wird.

Die genannten Sanierungsmaßnahmen erfolgen aufgrund der vorherrschenden radioaktiven Strahlung unter Vollschutz des ausführenden Personals. Um die Strahlendosis möglichst gering zu halten, müssen die Sanierungsmaßnahmen möglichst schnell ausgeführt werden. Das Dokument FR 2 651 709 A offenbart ein Werkzeug zur manuellen Bearbeitung einer Schadstelle auf der Dichtfläche eines kreisförmigen Flansches. Es ist jedoch nicht geeignet, eine Schadstelle in einer Dichtnut zu bearbeiten.

Aufgabe der Erfindung ist es daher, ein Werkzeug vorzuschlagen, mit welchem die Bearbeitung des Nutgrundes der im Behälterdeckel vorhandenen Dichtnuten schnell vorgenommen werden kann, wobei Beschädigungen des Dichtbereichs während der Bearbeitung weitgehend ausgeschlossen sein sollen.

Diese Aufgabe wird mit einem Werkzeug nach Anspruch 1 gelöst.

Bei der Bearbeitung einer Schadstelle stützt sich das Werkzeug mit den Stirnseiten der Gleitelemente, die planeben ausgebildet sind und in einer gemeinsamen Planebene verlaufen, an einer Fläche des Deckelflansches ab. Dadurch, dass das Spanmittel von den Gleitelementen flankiert ist, ist eine unbeabsichtigte Beschädigung von Flächen des Dichtbereiches praktisch ausgeschlossen. Da das Spanmittel die Stirnseiten der Gleitelemente im Wesentlichen nicht überragt, ist verhindert, dass im Bereich einer Schadstelle mehr Material abgetragen wird, als unbedingt erforderlich ist und dadurch Dellen in das Grundmaterial der Flansche eingearbeitet werden.

Die Gleitelemente weisen voneinander abgewandte Außenflächen auf, deren Abstand geringer ist als die Breite einer im Deckel vorhandenen Dichtnut. Ein solches Werkzeug eignet sich für die Bearbeitung des Nutgrundes. Die Gleitelemente werden beim Hin-und Herbewegen des Werkzeugs in der wie eine Schiene wirkenden Nut geführt, so dass hohe Bearbeitungsgeschwindigkeiten möglich sind, ohne dass die Gefahr einer Beschädigung der Nutseitenwände und insbesondere des Nutgrunds ausgeschlossen ist. Ein behinderungsfreies Bewegen des Werkzeugs in der Dichtnut kann noch dadurch begünstigt werden, dass die Außenflächen der Gleitelemente eine den Nutwänden der zu bearbeitenden Dichtnut entsprechende Krümmung aufweisen.

Es ist vorgesehen, dass auf der dem Handgriff abgewandten Seite des Grundkörpers eine Auflagefläche vorhanden ist, aus der die Gleitelemente vorstehen, wobei der Abstand der Stirnseiten der Gleitelemente zur Auflagefläche im Wesentlichen der Tiefe einer zu bearbeitenden Dichtnut entspricht. Die Auflagefläche liegt bei der Bearbeitung auf dem Nutrandbereich auf, wodurch ein seitliches Verkippen des Werkzeugs vermieden ist. Damit ist gewährleistet, dass die Wirkfläche eines Spanmittels, beispielsweise einer Flachfeile, stets parallel zum Nutgrund ausgerichtet ist.

Weiterhin ist bei einer bevorzugten Ausgestaltung vorgesehen, dass die Gleitelemente auswechselbar am Grundkörper fixiert sind. Je nach den gegebenen Abmessungen der zu bearbeitenden Dichtnut und deren Radius können die passenden Gleitelemente ausgewählt werden.

Neben der bereits genannten Flachfeile kommt insbesondere zur Feinbearbeitung ein Schleifband in Frage. Ein schnelles Wechseln eines solchen Bandes ist bei einer bevorzugten Ausgestaltung dadurch gewährleistet, dass zwischen den Gleitelementen ein Stützkörper vorhanden ist, der eine Gegenfläche für das Schleifband aufweist, wobei zwischen den in Längsrichtung der Gleitelemente weisenden Enden des Trägers und dem Grundkörper jeweils eine Öffnung vorhanden ist. Durch diese Öffnungen sind die Enden des Schleifbandes hindurch steckbar und mit einem auf der der Gegenfläche abgewandten Seite des Gegenhalters angeordneten Schnellspannvorrichtung fixierbar.

Die Erfindung wird nun unter Bezugnahme auf die beigefügten Zeichnungen näher erläutert. Es zeigen:
- Fig. 1: einen Teilschnitt durch den Flanschbereich eines Reak- tordruckbehälters,
- Fig. 2: die Draufsicht auf die Unterseite eines mit einer Flachfeile bestückten Werkzeugs,
- Fig. 3: einen Längsschnitt entsprechend Linie III-III in Fig. 2,
- Fig. 4: ein Werkzeug in einer teilweise geschnittenen Darstel- lung, bei dem als Spanmittel ein Fräskopf vorhanden ist,
- Fig. 5: die Draufsicht auf die Oberseite eines weiteren Werk- zeugs, bei dem als Spanmittel ein Schleifband vorgese- hen ist, das mit Hilfe einer Schnellspannvorrichtung fixiert ist,
- Fig. 6: einen Längsschnitt entsprechend Linie VI-VI in Fig. 5,
- Fig. 7: eine Draufsicht auf die Unterseits des Werkzeuges von Fig. 5,
- Fig. 8: einen Schnitt entsprechend Fig. 6, wobei jedoch die Schnellspannvorrichtung weg gelassen ist,
- Fig. 9: die Draufsicht auf die Unterseite eines nicht bean- spruchten, zur Flanschbearbeitung geeigneten Werkzeugs,
- Fig. 10: einen Schnitt entsprechend X-X in Fig. 9.

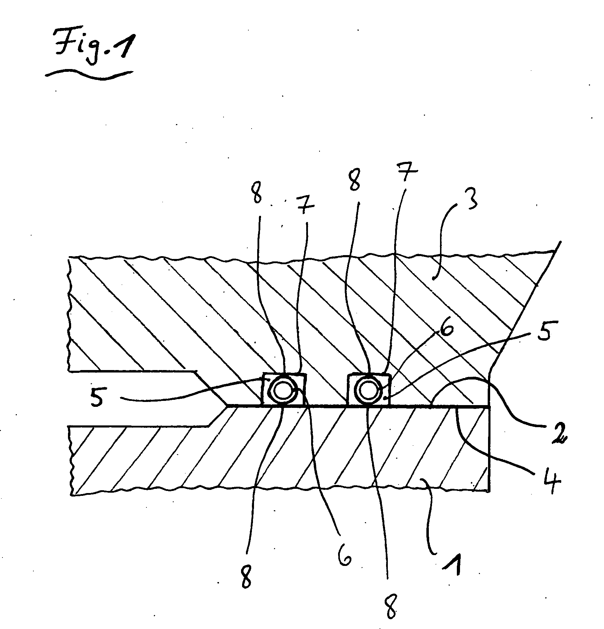

Wie der schematische Ausschnitt von Fig. 1 zeigt, ist stirnseitig an einem Reaktordruckbehälter 1 ein Flansch 2 vorhanden, auf dem ein Deckel 3 mit einem Gegenflansch 4 aufliegt. Im Gegenflansch 4 sind zwei radial beabstandete Dichtnuten eingebracht, welche jeweils einen metallischen O-Ring 6 aufnehmen. Die O-Ringe 6 sind in Axialrichtung des Reaktordruckbehälters 1 gesehen geringfügig komprimiert und nehmen dadurch eine ovale Form an. Der Berührungsbereich zwischen O-Ring und Nutgrund 7 bzw. Flansch 2 bildet den Dichtbereich 8. Eine dort etwa durch mechanische Beschädigung oder durch Korrosion verursachte Schadstelle kann zu Undichtigkeiten des Reaktordruckbehälters führen und muss spätestens im Zuge einer turnusmäßigen Revision ausgebessert werden. Zu diesem Zweck wird der Schadbereich zunächst ausgefräst und anschließend der ausgefräste Bereich aufgeschweißt. Die dadurch gebildete Aufschweißung 33 steht über den Nutgrund 7 bzw. über den Flansch 2 hinaus und muss durch eine spanende Bearbeitung abgetragen werden.

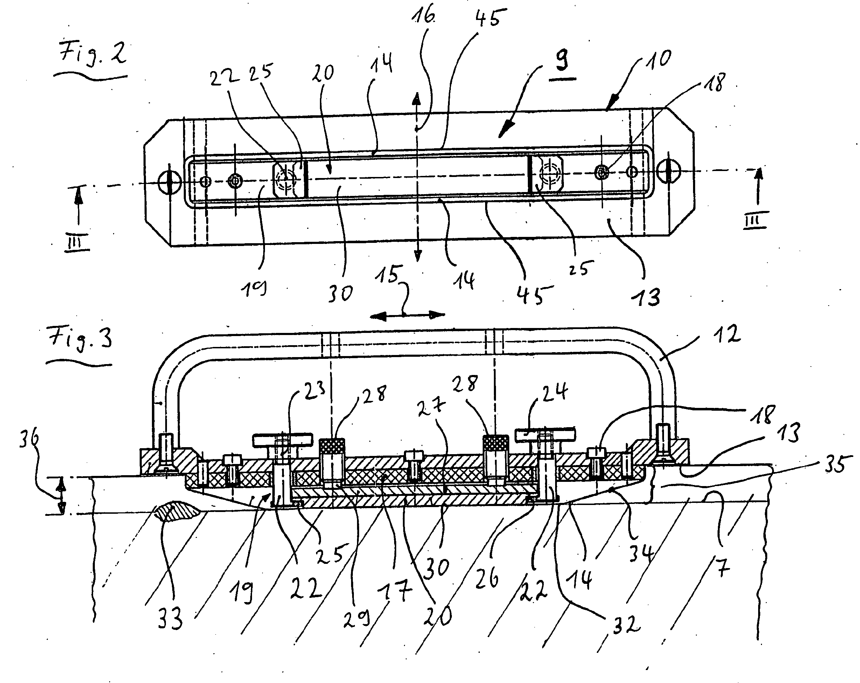

Fig. 2 und 3 zeigen ein Werkzeug zur Bearbeitung der Dichtnut 5 bzw. des Nutgrundes 7. Es weist einen im wesentlichen plattenförmigen Grundkörper 10 auf. An der Oberseite des Grundkörpers 10 ist ein bügelförmiger Handgriff fixiert. In einem mittleren Bereich der dem Handgriff 12 abgewandten, eine Auflagefläche 13 bildende Unterseite des Grundkörpers 10 stehen zwei Gleitelemente 14 im wesentlichen rechtwinklig vor.

Die Gleitelemente 14 sind etwa wandförmig ausgebildet, erstrecken sich in Längsrichtung 15 des Grundkörpers 10 und sind in Querrichtung 16 beabstandet. Die Gleitelemente 14 sind aus einem vorzugsweise chlorfreien Kunststoff, beispielsweise aus PE gefertigt. Sie sind an einer Grundplatte 17 angeformt, welche mit Schrauben 18 am Grundkörper 10 auswechselbar fixiert ist. Ihre Stirnseiten 32 sind planeben ausgestaltet und sind in einer gemeinsamen Planebene angeordnet. In dem von den Gleitelementen 14 flankierten Zwischenraum 19 ist eine Flachfeile 20 angeordnet. Diese ist mit zwei den Grundkörper 10 sowie die Grundplatte 17 durchsetzenden Klammern 22 gehalten, welche mit einem Gewindeabschnitt (23) aus dem Grundkörper 10 hervorstehen, wobei auf den Gewindeabschnitt 23 eine Rändelschraube 24 aufgedreht ist. Die Klammern 22 greifen mit einem Vorsprung 25 in eine endständige Ausnehmung 26 der Feile ein. Zwischen der Flachfeile 20 und der Grundplatte 17 ist eine Verstellplatte 27 angeordnet, deren Abstand zur Grundplatte 17 verstellbar ist. Zu diesem Zweck ist der Grundkörper 10 und die Grundplatte 17 von zwei Justierschrauben 28 durchsetzt, welche mit einem gewindefreien, radial verengten Endabschnitt 29 die Verstellplatte 27 beaufschlagen. Durch Betätigen der Justierschrauben 28, und der Rändelschrauben 24, was mit Schutzhandschuhen auch ohne Hilfswerkzeug möglich ist, lässt sich der Abstand der Wirkfläche 30 der Flachfeile 20 von den Stirnseiten 32 der Gleitelemente 14 variieren. So ist es zweckmäßig, den genannten Abstand zu Beginn einer Bearbeitung, wenn also eine Aufschweißung 33 noch relativ weit über den Nutgrund 7 hinaus steht, zu vergrößern. Die Endabschnitte 34 der Gleitelemente 14 sind zur Grundplatte 17 hin abgeschrägt, was das Aufschieben eines Werkzeugs 9 auf eine Aufschweißung 33 erleichtert. Der Überstand 35 bzw. der Abstand der Stirnflächen 32 der Gleitelemente 14 von der Auflagefläche 13, entspricht im wesentlichen der Tiefe 36 der Dichtnut 5. Dadurch ist gewährleistet, dass das Werkzeug 9 bei der Bearbeitung, bei der es in der Dichtnut 5 in deren Längsrichtung hin-und her bewegt wird, seitlich nicht oder nur in einem geringfügigen Ausmaß verkippen kann, so dass sich die Wirkfläche 30 der Flachfeile 20 oder auch eines anderen Spanmittels im wesentlichen stets parallel zur Planebene des Nutgrunds 7 erstreckt.

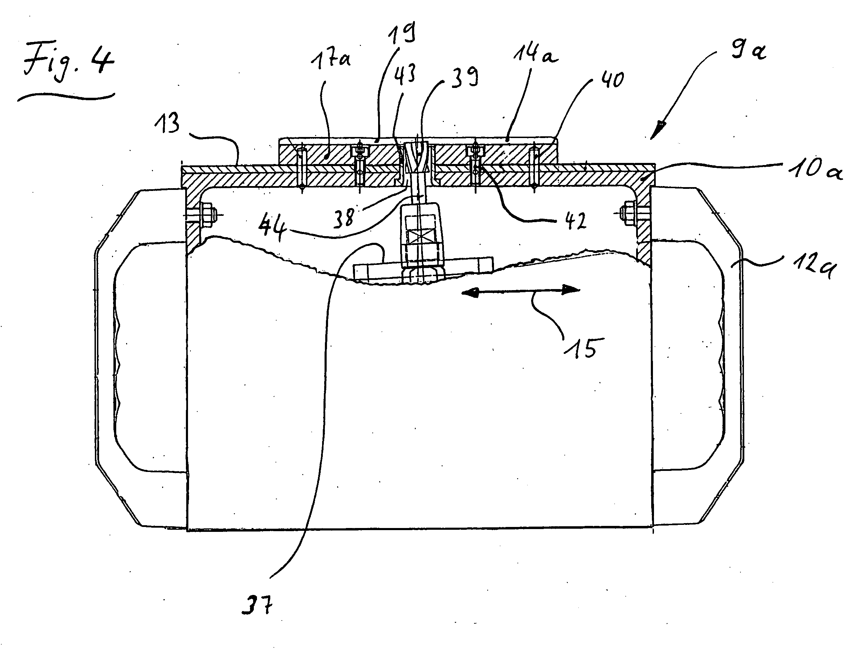

Ein zum Abtragen einer Aufschweißung 33 geeignetes alternatives Werkzeug 9a ist in Fig. 4 gezeigt. Der Grundkörper 10a ist ein etwa kastenförmiges Gehäuse, welches eine Fräseinrichtung 37 aufnimmt. Eine Flachseite des Gehäuses bildet eine Auflagefläche 13, aus der zwei sich in Längsrichtung 15 des Werkzeugs 9a erstreckende, einen Zwischenraum 19 flankierende Gleitelemente 14a vorstehen. Die Gleitelemente 14a sind an einer Grundplatte 17a angeformt. Die Grundplatte 17a bzw. Die Gleitelemente 14a sind ebenfalls in einem mittleren Bereich der Auflagefläche 13 angeordnet. Die Grundplatte 17a ist von einer in das Innere des gehäuseförmigen Grundkörpers 10a mündenden Öffnung 38 durchsetzt. Über die Öffnung 38 ragt ein Fräskopf 39 in den von den Gleitelementen 14a flankierten Zwischenraum 19 hinein. Die Grundplatte 17a ist mit Stiften 40 und mit Schrauben 42 am Grundkörper 10a fixiert. Dieser weist zwei seitliche Handgriffe 12a auf. Der Fräskopf 39 ist in einer die Öffnung 38 ausgleitenden Hartmetallbuchse 43 geführt, die ein seitliches durch die auftretenden Fräskräfte bedingtes Ausweichen des Fräskopfes 39 unterbindet. Der Überstand mit dem der Fräskopf 39 aus der Grundplatte 17a hervor steht, ist aufgrund einer entsprechenden Verstellbarkeit der Fräseinrichtung 37 variabel, wobei der Überstand maximal so einstellbar ist, dass eine Aufschweißung 33 bis auf eine Restüberhöhung von etwa 0,1mm abgetragen werden kann. Die Welle 44 der Fräseinrichtung 37 bzw. der Fräskopf 39 sind um ca. 3° gegen die Fräsrichtung bzw. die Längsrichtung 15 angestellt, um einen ausreichenden Freischnitt und eine Reduzierung der Fräskräfte zu erzielen. Bei dem Werkzeug 9a sowie auch bei dem weiter oben beschriebenen Werkzeug 9 weisen die Seitenflächen 45 der Gleitelemente 14, 14a eine Krümmung auf, die dem Radius der jeweils benachbarten Nutwand entspricht.

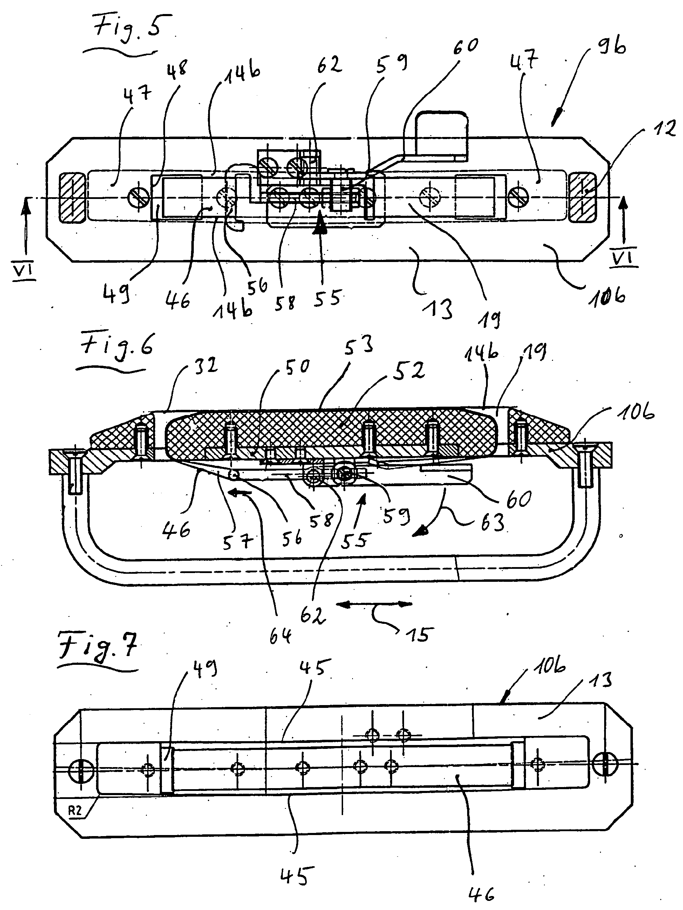

Wenn eine Aufschweißung 33 bis auf eine Restüberhöhung von 0,1 mm abgetragen ist, kommt das in Fig. 5-8 gezeigte Werkzeug 9b zum Einsatz, welches als Spanmittel ein Schleifband 46 umfasst. Das Werkzeug 9b weist ebenfalls einen plattenförmigen Grundkörper 10b mit einer Anschlagfläche 13 auf. Aus einem mittleren Bereich der Anschlagfläche 13 stehen Gleitelemente 14b vor, die zwischen sich ebenfalls einen Zwischenraum 19 frei halten, und deren Seitenflächen 45 ebenfalls eine dem Radius der Nutseitenwände entsprechende Krümmung aufweisen. Außerdem sind die Gleitelemente 14b lösbar am Grundkörper 10b fixiert. Die Enden der Gleitelemente 14b sind über Querwände 47 miteinander verbunden. An die einander zugewandten Innenseiten 48 der Querwände 47 grenzen jeweils an eine sich über die Breite des Zwischenraumes 19 erstreckende Öffnung 49 an. Der zwischen den Öffnungen 49 vorhandene Bereich 50 des Grundkörpers 10b trägt einen Stützkörper 52.

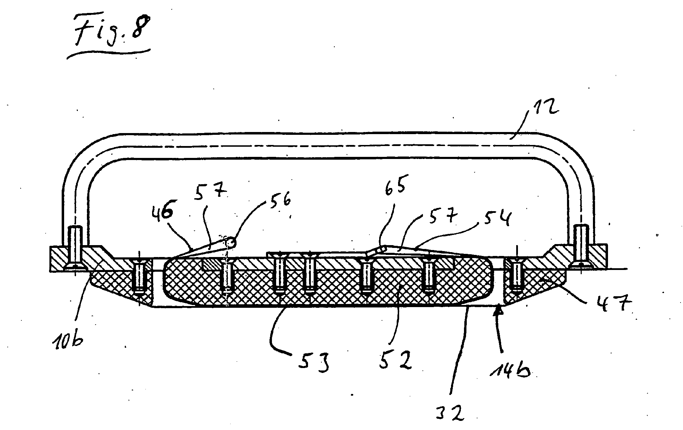

Dessen dem Grundkörper 10b abgewandte Seite bildet eine Gegenfläche 53 für das Schleifband 46. Der Stützkörper 52 erstreckt sich in Längsrichtung 15 teilweise in die Öffnungen 49 hinein. Auf der Oberseite des Grundkörpers 10b ist eine Schnellspannvorrichtung 55 für das Schleifband 46 angeordnet. Diese umfasst einen Haken 56, auf den das Schleifband 46 mit einer endständigen Schlinge 57 aufgesteckt ist. Der Haken 56 ist an dem einen Ende einer sich in Längsrichtung 15 erstreckenden Stange 58 fixiert, deren anderes Ende mit einem in Querrichtung 16 verlaufenden Zapfen 59 verbunden ist. Die Schnellspannvorrichtung 55 umfasst weiterhin einen Spannhebel 60, welcher um eine in Querrichtung 16 verlaufende, zwischen dem Zapfen 59 und dem Haken 56 am Grundkörper 10b fixierten Schwenkachse 62 schwenkbar gelagert ist. Wenn ausgehend vom verspannten Zustand gem. Fig. 6 der Spannhebel 60 in Richtung des Pfeiles 63 vom Grundkörper 10b weg geschwenkt wird, bewegt sich der Haken 56 etwa in Richtung des Pfeils 64, so dass die Schlinge 57 vom Haken 56 entfernt und das Schleifband 46 ausgewechselt werden kann. Das andere Ende des Schleifbandes 46 weist ebenfalls eine Schlinge 57 auf, wobei diese an einem ortsfest an einem Grundkörper 10b fixierten Haken 65 (Fig. 8) fixiert ist. Das Auswechseln eines Schleifbandes kann ohne Hilfswerkzeug und mit Schutzhandschuhen erfolgen.

Mit dem Werkzeug 9b kann eine Restüberhöhung einer Aufschweißung vollständig entfernt werden, wobei am Ende der Bearbeitung die ehemalige Schadstelle völlig planeben abgeschliffen ist. Ein über das erforderliche Maß hinausgehendes Abschleifen wird dadurch verhindert, dass das Schleifband 46 im wesentlichen nicht über die Stirnseiten 32 der Gleitelemente 14b hinaus ragt und dass bei der Bearbeitung die Auflagefläche 13 auf den die Dichtnut flankierenden Bereichen des Gegenflansches 4 des Deckels 3 aufliegt.

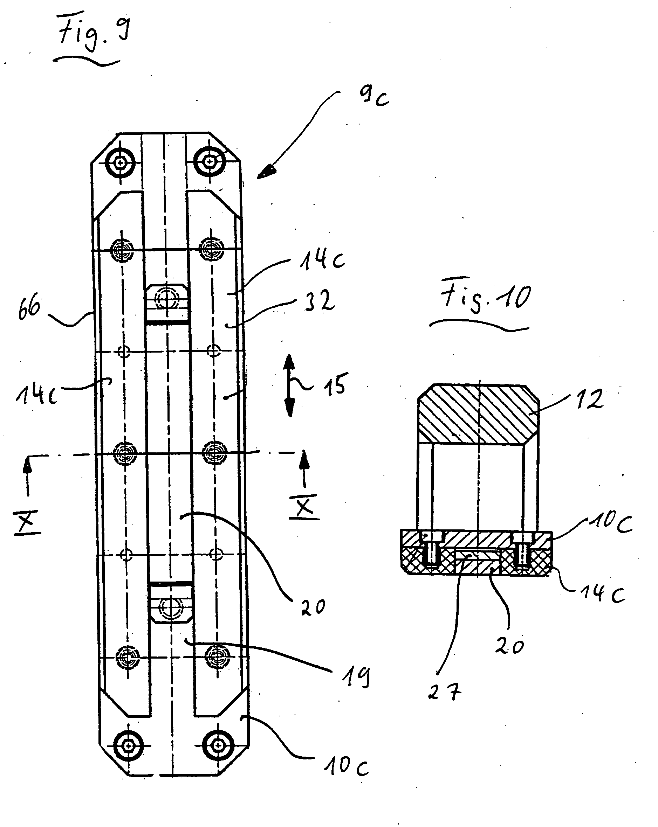

Fig. 9 und 10 zeigen ein nicht beanspruchtes Werkzeug 9c. Dieses ist ein Feilenwerkzeug und umfasst dementsprechend eine Flachfeile 20. Das Werkzeug 9c weist ebenfalls einen plattenförmigen Grundkörper 10c auf. Auf der Unterseite des Grundkör9a pers 10c sind zwei Gleitelemente 14c fixiert, die sich bei paralleler Ausrichtung in

Längsrichtung 15 erstrecken und einen Zwischenraum 19 zwischen sich frei lassen. Mittig im Zwischenraum ist die Flachfeile 20 angeordnet und auf eine dem Werkzeug 9 (Fig. 2, 3) entsprechende Art und Weise verstellbar fixiert. Im Gegensatz zu den weiter oben beschriebenen Ausführungsbeispielen sind die Gleitelemente 14c breiter, so dass sich ihre Stirnseiten 32 nahezu bis zum Rand 66 des Grundkörpers 10c erstrecken. Bei der spanenden Bearbeitung einer sich am Flansch 2 des Reaktordruckbehälters 1 befindlichen Aufschweißung 33 (in Fig. 9 nicht gezeigt) dienen die Stirnseiten 32 der Gleitelemente 14c als Auflageflächen, die am Flansch 2 anliegen und ein planebenes Abtragen einer Aufschweißung 33 bei hoher Bearbeitungsgeschwindigkeit und ohne Gefahr einer Beschädigung des Flansches 2 ermöglichen.

### Bezugszeichenliste

- 1: Reaktordruckbehälter
- 2: Flansch
- 3: Deckel
- 4: Gegenflansch
- 5: Dichtnut
- 6: O-Ring
- 7: Nutgrund
- 8: Dichtbereich
- 9: Werkzeug
- 10: Grundkörper
- 12: Handgriff
- 13: Auflagefläche
- 14: Gleitelement
- 15: Längsrichtung
- 16: Querrichtung
- 17: Grundplatte
- 18: Schraube
- 19: Zwischenraum
- 20: Flachfeile
- 22: Klammer
- 23: Gewindeabschnitt
- 24: Rändelschraube
- 25: Vorsprung
- 26: Ausnehmung
- 27: Verstellplatte
- 28: Justierschraube
- 29: Endabschnitt
- 30: Wirkfläche
- 32: Stirnseite
- 33: Aufschweißung
- 34: Endabschnitt
- 35: Überstand
- 36: Tiefe
- 37: Fräseinrichtung
- 38: Öffnung
- 39: Fräskopf
- 40: Stift
- 42: Schraube
- 43: Hartmetallbuchse
- 44: Welle
- 45: Seitenfläche
- 46: Schleifband
- 47: Querwand
- 48: Innenseite
- 49: Öffnung
- 50: Bereich
- 52: Stützkörper
- 53: Gegenfläche
- 55: Schnellspannvorrichtung
- 56: Haken
- 57: Schlinge
- 58: Stange
- 59: Zapfen
- 60: Spannhebel
- 62: Schwenkachse
- 63: Pfeil
- 64: Pfeil
- 65: Haken
- 66: Rand

## Patentansprüche

1. Werkzeug zur manuellen Bearbeitung einer Schadstelle in einer im Deckel (3) eines Reaktordruckbehälters (1) vorhandenen Dichtnut (5), mit folgender Ausgestaltung:
- es weist einen mit wenigstens einem Handgriff (12) versehenen Grundkörper (10) auf,
- der Grundkörper (10) weist eine dem Handgriff (12) abgewandte, eine Auflagefläche (13) bildende Unterseite auf , die bei der Bearbeitung auf dem Nutranbereich aufliegt und aus der zwei etwa wandförmig ausgebildete, zur Abstützung an einer zu bearbeitenden Fläche der Dichtnut (5) dienende und sich in Längsrichtung (15) des Grundkörpers (10) erstreckende Gleitelemente (14, 14a, 14b)im Wesentlichen rechtwinklig hervorstehen,
- die Gleitelemente (14, 14a, 14b) sind in Querrichtung voneinander beabstandet, wobei sie einen Zwischenraum (19) zwischen sich freilassen, in dem ein Spanmittel zur spanenden Bearbeitung so angeordnet ist, dass es im Wesentlichen nicht über Stirnflächen (32) der Gleitelemente (14, 14a, 14b) hinausragt,
- die Stirnflächen (32) der Gleitelemente (14, 14a, 14b) sind planeben ausgebildet und verlaufen in einer gemeinsamen Planebene.

2. Werkzeug nach Anspruch 1,
**dadurch gekennzeichnet,**
**dass** die Gleitelemente (14) auswechselbar am Grundkörper (10) fixiert sind.

3. Werkzeug nach einem der vorhergehenden Ansprüche,
**dadurch gekennzeichnet,**
**dass** das Spanmittel auswechselbar am Grundkörper (10) fixiert ist.

4. Werkzeug nach einem der vorhergehenden Ansprüche,
**dadurch gekennzeichnet,**
**dass** der Abstand des Spanmittels zu den Stirnflächen (32) der Gleitelemente (14) einstellbar ist.

5. Werkzeug nach einem der vorhergehenden Ansprüche,
**dadurch gekennzeichnet,**
**dass** als Spanmittel eine Flachfeile (20) vorhanden ist.

6. Werkzeug nach einem der Ansprüche 1 bis 4,
**dadurch gekennzeichnet,**
**dass** als Spanmittel ein Schleifband (46) vorhanden ist.

7. Werkzeug nach Anspruch 6,
**dadurch gekennzeichnet,**
**dass** zwischen den Gleitelementen (14b) ein Stützkörper (52) vorhanden ist, der eine Gegenfläche (53) für das Schleifband (46) aufweist, dass zwischen den in Längsrichtung (15) des Grundkörpers (10b) weisenden Enden des Stützkörpers (52) und dem Grundkörper (10b) jeweils eine Öffnung (49) vorhanden ist, und dass auf der der Gegenfläche (53) abgewandten Seite des Stützkörpers (52) eine Schnellspannvorrichtung (55) für ein am Stützkörper fixiertes Schleifband (46) vorhanden ist.

8. Werkzeug nach einem der Ansprüche 1 bis 4,
**dadurch gekennzeichnet,**
**dass** als Spanmittel ein Fräskopf (39) vorhanden ist.

## Claims

1. Tool for manually processing a damage site in a sealing groove (5) in the cover (3) of a reactor pressure vessel (1), having the following configuration:
- it has a base body (10) provided with at least one handle (12),
- the base body (10) has a lower side which is remote from the handle (12) and forms a placement surface (13), wherein the lower side bears against the groove edge region during processing and two sliding elements (14, 14a, 14b), which are approximately wall-shaped, serve for supporting against a surface to be treated of the sealing groove (5) and extend in the longitudinal direction (15) of the base body (10), protrude from said lower side substantially at a right angle,
- the sliding elements (14, 14a, 14b) are spaced apart from one another in the transverse direction, wherein they leave free an intermediate space (19) between them, in which intermediate space (19) a metal-removing means for removing metal is arranged such that it does not project substantially beyond end faces (32) of the sliding elements (14, 14a, 14b),
- the end faces (32) of the sliding elements (14, 14a, 14b) are planar and extend in a common plane.

2. Tool according to Claim 1, **characterized in that** the sliding elements (14) are fixed to the base body (10) such that they can be interchanged.

3. Tool according to one of the preceding claims, **characterized in that** the metal-removing means is fixed to the base body (10) such that it can be interchanged.

4. Tool according to one of the preceding claims, **characterized in that** the spacing between the metal-removing means and the end faces (32) of the sliding elements (14) can be adjusted.

5. Tool according to one of the preceding claims, **characterized in that** a flat file (20) is present as the metal-removing means.

6. Tool according to one of Claims 1 to 4, **characterized in that** an abrasive belt (46) is present as the metal-removing means.

7. Tool according to Claim 6, **characterized in that** a support body (52) is present between the sliding elements (14b), which support body (52) has a counter surface (53) for the abrasive belt (46), **in that** in each case one opening (49) is present between the ends, which extend in the longitudinal direction (15) of the base body (10b), of the support body (52) and the base body (10b), and **in that** a quick-clamp apparatus (55) for an abrasive belt (46) which is fixed to the support body is present on the side of the support body (52) that is remote from the counter surface (53).

8. Tool according to one of Claims 1 to 4, **characterized in that** a milling head (39) is present as the metal-removing means.

## Revendications

1. Outil pour l'usinage manuel d'un point endommagé dans une région étanche (5) présente dans le couvercle (3) de la cuve d'un réacteur sous pression (1) avec la configuration suivante :
- il présente un corps de base (10) muni d'au moins d'une poignée (12),
- le corps de base (10) présente une sous-face formant une surface porteuse (13) détournée de la poignée (12), qui, lors de l'usinage, repose sur le rebord de la région et de laquelle deux éléments coulissants (14, 14a, 14b) formant sensiblement une paroi, servant à l'appui sur une surface à usiner de la région étanche (5) et s'étendant dans le sens longitudinal (15) du corps de base (10), font saillie sensiblement à angle droit,
- les éléments coulissants (14, 14a, 14b) sont espacés l'un de l'autre dans le sens transversal, laissant un espace libre (19) entre eux, dans lequel des moyens de découpage pour l'usinage par retrait de copeaux sont disposés de sorte qu'ils ne font pas saillie au-dessus des faces avant (32) des éléments coulissants (14, 14a, 14b),
- les faces avant (32) des éléments de coulissants (14, 14a, 14b) sont planes et s'étendent dans un plan commun.

2. Outil selon la revendication 1, **caractérisé en ce que** les éléments coulissants (14) sont fixés de manière amovible sur le corps de base (10).

3. Outil selon la revendication 1 ou 2, **caractérisé en ce que** les moyens de découpage sont fixés de manière amovible sur le corps de base (10).

4. Outil selon l'une des revendications précédentes, **caractérisé en ce que** la distance des moyen de découpage jusqu'aux faces avant (32) des éléments coulissants (14) est réglable.

5. Outil selon l'une des revendications précédentes, **caractérisé en ce qu'**une lime plate (20) est présente dans les moyens de découpage.

6. Outil selon l'une des revendications 1 à 4, **caractérisé en ce qu'**une bande abrasive (46) est présente dans les moyens de découpage.

7. Outil selon la revendication 6, **caractérisé en ce qu'**un corps d'appui (52) est présent entre les éléments coulissants (14b), lequel présente une surface opposée (53) pour la bande abrasive (46), **en ce qu'**une ouverture (49) est présente respectivement entre les extrémités du corps d'appui (52) orienté dans le sens longitudinal (15) du corps de base (10b) et le corps de base (10b), et **en ce que** sur le côté du corps d'appui (52) opposé à la surface opposée (53), un dispositif à serrage rapide (55) est présent pour la bande abrasive (46) fixée sur le corps d'appui.

8. Outil selon l'une des revendications 1 à 4, **caractérisé en ce qu'**une tête de fraisage (39) est présente dans les moyens de découpage.
